# EUROPÄISCHE PATENTSCHRIFT

(11) **EP 2 063 060 B1**
(45) Veröffentlichungstag und Bekanntmachung des Hinweises auf die Patenterteilung: **28.06.2017**
(21) Anmeldenummer: 08020263.3
(22) Anmeldetag: 21.11.2008
(51) Int. Cl.: E06B 7/215, F16J 15/06

(54) **Anordnung aus einer Stange und einer Dichtung**
Arrangement of a bar and a seal
Arrangement d'une barre et d'un joint

(30) Priorität: 22.11.2007 DE 202007016428 U
(43) Veröffentlichungstag der Anmeldung: 27.05.2009
(73) Patentinhaber: F. Athmer OHG, 59757 Arnsberg (DE)
(72) Erfinder: Faflek, Jenö, 59757 Arnsberg (DE); Cronenberg, Carl-Julius, 59757 Arnsberg (DE)
(74) Vertreter: Graefe, Jörg

(56) Entgegenhaltungen:
- DD-A5- 291 117
- DE-A1- 3 124 106
- DE-C- 592 020
- US-A- 813 268

## Beschreibung

Die vorliegende Erfindung betrifft eine Anordnung aus einer Stange und einer Dichtung zum Abdichten der Bodenluft einer Tür, mit einem Auslöseelement zur Auslösung der Dichtung, wobei die Dichtung eine bei einer Auslösung der Dichtung absenkbaren Dichtungsleiste und einem Mechanismus aufweist, der ein Kopplungselement umfasst, wobei der Mechanismus geeignet und eingerichtet ist bei der Auslösung der Dichtung eine Bewegung des ersten Kopplungselements in Richtung parallel zur Dichtleiste in eine dazu senkrechte Bewegung der Dichtleiste umzusetzen und wobei die Stange sich im Wesentlichen senkrecht zur Dichtungsleiste erstreckt.

Aus der Patentschrift mit der Veröffentlichungsnummer DD 291 117 A5 ist eine Dichtung mit einer bei Auslösung der Dichtung absenkbaren Dichtungsleiste bekannt. Die Dichtung weist ein Auslöseelement auf, welches seitlich über ein Dichtungsgehäuse der Dichtung hinausragt. Der Auslöser schlägt bei einem Schließen der Tür an einer Zarge an und wird nach innen gedrückt. Das Auslöseelement steht mit dem Kopplungselement des Mechanismusses in Verbindung und der Mechanismus bewirkt ein Absenken der Dichtungsleiste. Dichtungen, mit einem seitlich über das Dichtungsgehäuse hinausragendem Auslöser sind über diese Druckschrift hinaus in großer Vielzahl aus dem Stand der Technik bekannt.

Die in der Patentschrift mit der Veröffentlichungsnummer DD 291 117 A5 offenbarte Dichtung weist neben dem Auslöser ein zweites Element auf, welches das Absenken der Dichtung bewirken kann. Dieses zweite Element ist eine Treibriegelstange, die durch die Dichtung hindurchgeführt ist. Die Triebriegelstange ist nicht mit dem Mechanismus zum Absenken der Dichtungsleiste gekoppelt. Vielmehr greift die Treibriegelstange über einen quer in der Stange verschieblichen und federbelasteten Bolzen unmittelbar an der Dichtungsleiste an, um diese in der Höhe zu verschieben.

Damit die Dichtleiste der in der Patentschrift DD 291 117 A5 offenbarten Dichtung vollständig abgesenkt werden kann und über der ganzen Länge auf dem Fußboden zum Abdichten der Bodenluft anliegt, ist einerseits die Auslösung des Auslösers durch Anschlagen an der Zarge und zum anderen ein Absenken der Treibriegelstange der Tür notwendig. Der Auslöser bewirkt das Absenken der Dichtleiste an einem ersten Ende der Dichtung, während die Treibriegelstange das Absenken an einem zweiten Ende der Dichtung bewirkt.

Die in der Patentschrift DD 291 117 A5 offenbarte Dichtung weist somit insgesamt zwei auslösende Elemente, nämlich das Auslöseelement, das seitlich über das Dichtungsgehäuse hinausragt, und die Treibriegelstange auf. Weder das eine Element zum Auslösen noch das andere Element zum Auslösen ist allerdings geeignet um die Dichtleiste vollständig zur Anlage am Fußboden zu bringen. Während das vollständige Absenken der Dichtungsleiste mit einem seitlich aus dem Dichtgehäuse herausragenden Auslöseelement bekannt ist, gibt es keine zufriedenstellende Lösungen, mit denen das vollständige Absenken der Dichtleiste mittels einer Treib- oder Kantriegelstange möglich ist.

Auch die Druckschrift mit der Nummer US 813 268 offenbart eine Dichtung. Die Dichtung weist einen Auslöser auf, der an einem Türrahmen anschlagen kann, um die Dichtung auszulösen. Das Auslösen der Dichtung kann durch eine Betätigungseinrichtung in der Form eines Knaufs in der Mitte der Tür unterstützt werden. Eine Treibriegelstange als Auslöseelement ist ebenso wenig offenbart wie ein Auslöseelement, dass eine Bewegungsrichtung hat, die bezogen auf die Erstreckungsrichtung der Dichtungsleiste einen Winkel zwischen 0° und 90° hat.

Ferner ist keine Lösung bekannt, bei der der Auslöser bezogen auf die Erstreckungsrichtung der Dichtungsleiste in einem Winkel zwischen 0° und 90° auf die Dichtung einwirkt.

Hier setzt die vorliegende Erfindung an.

Der Erfindung liegt die Aufgabe zugrunde, eine Anordnung der eingangs genannten Art so fortzubilden, dass die Dichtung zum Zusammenwirken mit einem auslösenden Element geeignet und eingerichtet ist, welches in einer Wirkungsrichtung mit einem Winkel größer als 0°, insbesondere senkrecht zur Erstreckungsrichtung der Dichtungsleiste auf die Dichtung einwirkt.

Diese Aufgabe wird erfindungsgemäß dadurch gelöst,
- dass die Stange zum Auslösen der Dichtung verschiebbar ist und entweder das Auslöseelement zur Auslösung der Dichtung von der Stange mit einer Kraft beaufschlagbar ist oder das Auslöseelement durch die Stange gebildet ist,
- dass mittels des Kopplungselementes des Mechanismus der Dichtung eine Bewegung mit einer Bewegungsrichtung mit einem Winkel größer als 0°, insbesondere senkrecht zur Bewegungsrichtung des Kopplungselements aufnehmbar und mittels des Mechanismus die Bewegung des Kopplungselementes in eine Absenkbewegung der Dichtleiste über die gesamte Länge der Dichtleiste umsetzbar ist und
- dass das Kopplungselement an einem dem Auslöseelement zugewandten Ende eine zur Bewegungsrichtung des Kopplungselementes schräge Fläche zur Krafteinleitung aus dem Auslöseelement aufweist.

Die Dichtung ist zu einem Zusammenwirken mit einem Auslöselement mit einer Bewegungsrichtung mit einem Winkel größer als 0°, insbesondere senkrecht zur Bewegungsrichtung des Kopplungselements geeignet und eingerichtet. Das Auslöseelement kann dabei Teil der Dichtung sein oder aber nicht zur Dichtung gehören und mit der Dichtung lediglich zusammenwirken. Im Unterschied zu der Lösung, wie sie aus der Druckschrift DD 291 117 A5 bekannt ist, kann eine Treibriegelstange oder Kantriegelstange als Auslöseelement nicht unmittelbar auf die Dichtungsleiste einwirken, sondern eine als Auslöseelement vorgesehen Treibriegel- oder Kantriegelstange wirkt mit dem Mechanismus zusammen, der das Kopplungselement aufweist, welches die Bewegung des Auslöseelements aufnimmt. In dem Mechanismus wird die Bewegung des Auslöseelements und des Kopplungselements in eine Absenkbewegung der Dichtungsleiste über die gesamte Länge der Dichtleiste umgesetzt, so dass die Dichtungsleiste über ihre gesamte Länge, d. h vollständig, zur Anlage an dem Fußboden kommt.

Gemäß der Erfindung kann die Dichtung ein Dichtungsgehäuse aufweisen, in welchem der Mechanismus angeordnet ist, und aus welchem die Dichtungsleiste, die sich parallel zum Gehäuse erstreckt zumindest im abgesenkten Zustand herausragt. Das Dichtungsgehäuse kann im Querschnitt zumindest im Wesentlichen eine U-Form haben.

Das Dichtungsgehäuse einer Dichtung einer erfindungsgemäßen Anordnung kann eine Ausnehmung aufweisen, durch welche das Kopplungselement zur Auslösung zugänglich ist, welche von dem Auslöseelement durchgriffen ist oder welche für einen Durchgriff eines Auslöselements geeignet und eingerichtet ist. Je nach Ausführung der Dichtung weist die Dichtung ein Auslöseelement auf oder nicht. Sofern kein Auslöseelement Teil der Dichtung ist, wird durch die Ausnehmung dafür Sorge getragen, dass das Kopplungselement zugänglich ist und das Auslöseelement, das nicht Teil der Dichtung ist, diese Ausnehmung durchgreifen kann, um eine Wirkverbindung mit dem Kopplungselement zu treten. Ist dagegen das Auslöseelement Teil der Dichtung, kann das Auslöseelement zum Auslösen der Dichtung durch die Ausnehmung zugänglich sein oder aber die Ausnehmung durchgreifen.

Gemäß der Erfindung ist das Kopplungselement des Mechanismus einer Dichtung einer erfindungsgemäßen Anordnung über mindestens eine zur Bewegungsrichtung des Kopplungselements schräge Fläche zur Krafteinleitung aus dem Auslöseelement geeignet und eingerichtet sein. Während das Auslöseelement eine im Wesentlichen senkrechte Bewegungsrichtung bezogen auf die Erstreckungsrichtung der Dichtungsleiste hat, hat das Kopplungselement eine Bewegungsrichtung, die im Wesentlichen parallel zur Erstreckungsrichtung der Dichtungsleiste liegt. Die Bewegung des Auslöseelements muss daher in eine dazu senkrechte Bewegung des Kopplungselements umgesetzt werden, wozu eine schräge Fläche des Kopplungselements geeignet ist. Die schräge Fläche ist am Kopplungselement an einem dem Auslöseelement zugewandten Ende des Kopplungselement vorgesehen.

Ebenso ist es möglich, dass das Auslöseelement über mindestens eine zur Bewegungsrichtung des Auslöseelements schräge Fläche zur Krafteinleitung in das Kopplungselement geeignet und eingerichtet ist. Ebenso ist es möglich, dass die schräge Fläche des Auslöseelements an einem dem Kopplungselement zugewandten Ende vorgesehen ist.

Sowohl das Auslöseelement als auch das Kopplungselement können eine schräge Fläche aufweisen.

Die schräge Fläche des einen Elements, d. h. des Auslöseelements bzw. des Kopplungselements kann zum Gleiten auf einer Fläche des jeweils anderen Elements geeignet und eingerichtet sein. Dazu kann die schräge Fläche vorteilhaft nach Art eines Zylindermantels gewölbt oder nach Art einer Kugelkappe gewölbt, d.h. ballig ausgebildet sein, um eine Flächenpressung zu vermindern.

Eine Dichtung einer erfindungsgemäßen Anordnung kann ein Führungselement aufweisen, in welchem das Auslöseelement geführt angeordnet ist. Bei dem Führungselement kann es sich um eine Führungshülse mit einem ringförmigen Querschnitt handeln. Die Führungshülse ist vorteilhaft auf der Außenseite des Dichtungsgehäuses angebracht und kann die Ausnehmung in dem Dichtungsgehäuse umgreifen.

Das Auslöselement kann mittels einer Feder in Richtung einer nicht ausgelösten Stellung vorgespannt sein, so dass es nach einer Entlastung von der Auslösekraft in eine Ausgangsstellung zurückkehren kann. Die Feder kann einerseits an einem Bund oder an einem Kragen des Auslöseelements und andererseits an dem Dichtungsgehäuse abgestützt sein.

Eine Dichtung einer erfindungsgemäßen Anordnung kann in einer besonderen Ausführung ein Riegelelement aufweisen, welches die Dichtungsleiste durchgreift und sowohl zum Dichtungsgehäuse als auch zur Dichtungsleiste verschiebbar ist. Das Riegelelement kann mit dem Auslöseelement gekoppelt sein oder zum Koppeln mit dem Auslöseelement geeignet und eingerichtet sein, je nachdem ob das Auslöseelement Teil der Dichtung ist oder nicht. Das Riegelelement und die Dichtungsleiste können geeignet und eingerichtet sein gleichzeitig verschoben zu werden, wobei das Riegelelement bei einer Auslösung durch das Auslöseelement um eine größere Strecke verschoben wird als die Dichtungsleiste. Das Auslöseelement und das Riegelelement können fest miteinander verbunden sein. Die unterschiedlichen Wegstrecken, die das Riegelelement und die Dichtungsleiste zurücklegen, kann über eine Untersetzung im Mechanismus der Dichtung vorgegeben werden.

Die Stange kann mit einem der Dichtung abgewandten Ende zur Kopplung mit einem Schloss, einem Treibriegel- oder Kantriegelhebel oder mit einem Türdrücker oder ähnlichem koppelbar sein.

Ausführungsbeispiele für die erfindungsgemäße Dichtung und Ausführungsbeispiele für erfindungsgemäße Anordnungen mit erfindungsgemäßen Dichtungen sind anhand der schematischen Zeichnungen näher erläutert. Es zeigt
- Fig. 1: eine Darstellung eines Türflügels mit einer erfindungsgemäßen Anordnung bestehend aus einer Dichtung und einer Stange,
- Fig. 2: einen Schnitt durch ein Türblatt mit der erfindungsgemäßen Anordnung bei angehobener Dichtleiste,
- Fig. 2a: das Türblatt und die Anordnung gemäß Figur 1 bei abgesenkter Dichtleiste,
- Fig. 2b: einen Schnitt entlang der Linie IIb - IIb in Fig. 1,
- Fig. 3: einen Schnitt durch ein Türblatt mit einer zweiten Anordnung bei angehobener Dichtleiste,
- Fig. 3a: das Türblatt und die Anordnung gemäß Figur 3 bei abgesenkter Dichtleiste,
- Fig. 3b: einen Schnitt entlang der Linie IIIb - IIIb in Fig. 3,
- Fig. 4: einen Schnitt durch ein Türblatt mit einer dritten erfindungsgemäßen Anordnung bei angehobener Dichtleiste,
- Fig. 4a: das Türblatt und die erfindungsgemäße Anordnung gemäß Fig. 4 bei abgesenkter Dichtleiste,
- Fig. 4b: einen Schnitt entlang der Linie IVa - IVa in Fig. 4,
- Fig. 5: ein Türblatt mit einer vierten erfindungsgemäßen Anordnung im Schnitt bei angehobener Dichtleiste,
- Fig. 5a: das Türblatt und die Anordnung gemäß Fig. 5 im Schnitt bei abgesenkter Dichtleiste,
- Fig. 5b: einen Schnitt entlang der Linie Vb - Vb in Fig. 5,
- Fig. 6: eine Prinzipdarstellung einer Stange, eines Riegelelements und eines Kopplungselements bei angehobener Stange,
- Fig. 6a: einen Schnitt entlang der Linie VIa - VIa in Fig. 6,
- Fig. 6b: die Anordnung aus Fig. 6 mit einer abgesenkten Stange.

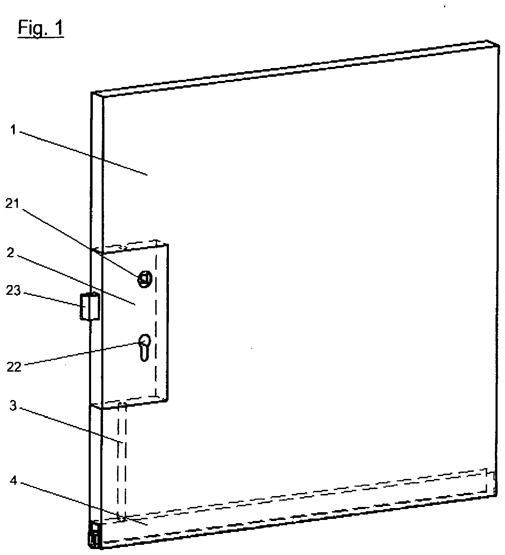

Das in Figur 1 dargestellte Türblatt 1 weist in einem mittleren Bereich einen Schlosskasten 2 auf. Der Schlosskasten 2 weist eine Aufnahme 21 für einen Türdrücker, eine Aufnahme 22 für einen Schließzylinder und eine Schließfalle 23 auf. In einem Schlitz in der unteren Stirnseite des Türblatts ist eine Bodendichtung angeordnet, die eine zum Abdichten der sogenannten Bodenluft absenkbare Dichtungsleiste aufweist. Der Schlosskasten 2 und die Bodendichtung 4 sind über eine Stange 3 miteinander verbunden. Die Bodendichtung 4 ist so ausgestaltet, dass bei einer Bewegung der Stange 3 nach unten die Bodendichtung 4 auslöst und die Dichtungsleiste zum Abdichten der Bodenluft abgesenkt wird. Das Absenken der Stange 3 kann dabei auf unterschiedliche Art und Weise ausgelöst werden. Denkbar ist beispielsweise ein Verriegeln der Tür durch Abschließen oder etwas ähnliches. Ebenso ist denkbar, dass die Bewegung der Stange 3 an eine Betätigung des Türdrückers gekoppelt ist.

Die Art und Weise wie die Stange 3 nach unten verschoben wird bzw. wie das Verschieben der Stange 3 bewirkt wird, ist nicht Gegenstand der Erfindung und daher auch nachstehend nicht näher beschrieben.

Gegenstand der Erfindung ist vielmehr die Art und Weise wie die Stange 3 mit der Bodendichtung 4 zum Bewirken des Absenkens der Dichtleiste gekoppelt ist.

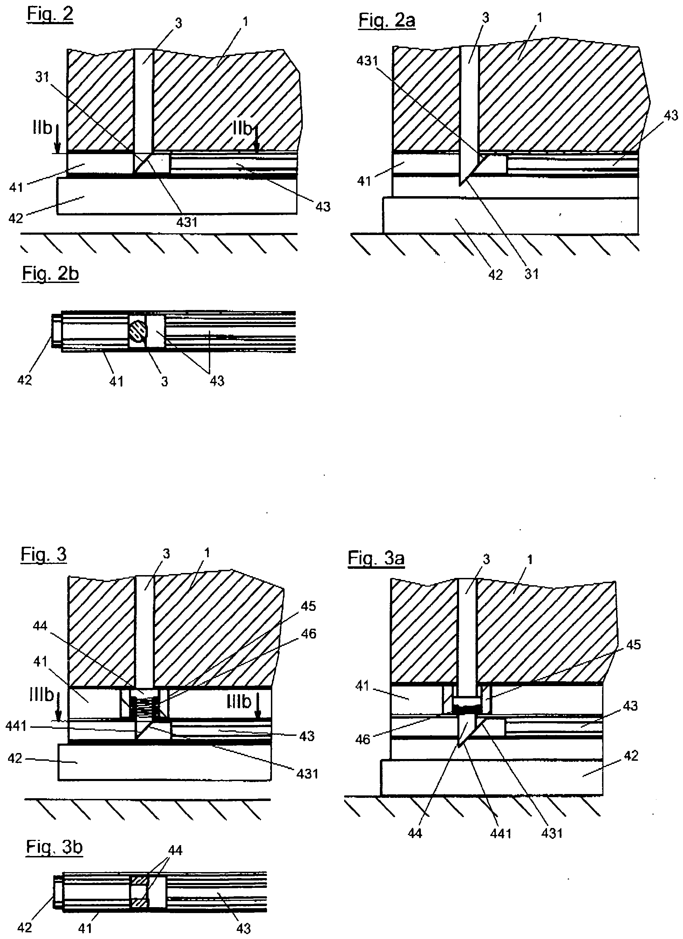

Zur Beschreibung eines ersten Ausführungsbeispiels einer Anordnung aus einer Stange 3 und einer Bodendichtung 4 wird auf die Figuren 2 bis 2b Bezug genommen. In der Darstellung der Figuren 2 und 2a ist das Türblatt 1 in einer Ebene geschnitten, welche die Bodendichtung 4 und die Stange 3 sichtbar macht.

Die Stange 3 ist in einem Kanal in dem Türblatt 1 geführt. Die Bodendichtung 4 ist in einem Schlitz an der unteren Stirnseite des Türblatts 1 eingesetzt.

Die Bodendichtung 4 weist ein Gehäuse 41 auf, welches im Querschnitt U-förmig ist. Die dem Betrachter der Figuren 2 und 2a zugewandte Seitenwand des Dichtungsgehäuse 41 ist nicht dargestellt, da auch das Dichtungsgehäuse 41 geschnitten ist und zwar in einer Ebene parallel zu den Seitenwänden durch den die beiden Seitenwände verbindenden Steg.

Bodendichtungen mit einem derartigen, im Querschnitt im Wesentlichen U-förmigen Dichtungsgehäuse 41 sind aus dem Stand der Technik hinlänglich bekannt.

In dem Dichtungsgehäuse 41 ist ein Mechanismus untergebracht, von dem ein Kupplungselement 43 dargestellt ist. Das Kopplungselement 43 ist in seiner Erstreckungsrichtung und parallel zur Erstreckungsrichtung der Dichtungsleiste 42 in dem Dichtungsgehäuse 41 verschiebbar gelagert. Das Kopplungselement 43 bewirkt bei einer Verschiebung in seine axiale Richtung aus der in der Figur 2 dargestellten Position in die in der Figur 2a dargestellte Position ein Absenken der Dichtungsleiste 42. Auch dieses ist hinlänglich von Bodendichtungen aus dem Stand der Technik bekannt.

Außerdem dient das Kopplungselement 43 der Verbindung mit einem Auslöser, der im Falle des Ausführungsbeispiels gemäß der Figuren 2 bis 2b durch die Stange 3 gebildet wird. Das Kopplungselement 43 weist an einem der Stange 3 zugewandten Ende eine schräge Fläche 431 auf. Auch die als Auslöseelement dienende Stange 3 hat an ihrem unteren Ende, welches dem Kopplungselement 43 zugewandt ist, eine schräge Fläche 31.

Ein Verschieben des Auslöseelements 3 nach unten bewirkt, dass die beiden schrägen Flächen 31, 431, die in der Darstellung der Figur 2, d. h. in der angehobenen Stellung der Dichtungsleiste 42, deckungsgleich aufeinanderliegen, gegeneinander verschoben werden, um die in der Figur 2a dargestellten Positionen einzunehmen. Durch das Verschieben des Auslöseelements 3 nach unten wird dabei das Kopplungselement 43 zur Seite verschoben. Diese Verschiebung bewirkt gleichzeitig das Absenken der Dichtungsleiste 42, wie in der Figur 2a dargestellt.

Damit das untere Ende der Stange 3, d. h. die schräge Fläche 31 des Auslöseelements mit der korrespondierenden schrägen Fläche 431 des Kopplungselements 43 in Wirkverbindung treten kann, ist im Steg des Dichtungsgehäuses 41 eine Ausnehmung vorgesehen, welche von dem Auslöseelement 3 durchdrungen ist.

Die in den Figuren 3 bis 5b schematisch dargestellten weiteren Ausführungsbeispiele entsprechen im Grundsatz dem in den Figuren 2 bis 2 schematisch dargestellten Ausführungsbeispiel. Es sind daher gleiche Elemente und Teile der Anordnungen mit gleichen Bezugszeichen versehen. Nachfolgend wird lediglich auf die Unterschiede zwischen den Ausführungsbeispielen eingegangen.

Das Ausführungsbeispiel gemäß der Figuren 3 bis 3b unterscheidet sich im Wesentlichen dadurch von dem Ausführungsbeispiel gemäß der Figuren 2a bis 2b, dass ein von der Stange 3 getrenntes Auslöseelement 44 vorgesehen ist, welches mit dem Kopplungselement 43 in Wirkverbindung steht, um die Bewegung der Stange 3 in eine Absenkbewegung der Dichtungsleiste 42 umzusetzen. Das Auslöseelement 44 hat ein erstes Ende, welches eine schräge Fläche 441 aufweist, die mit der schrägen Fläche 431 des Kopplungselements 43 in Wirkverbindung steht. Das andere Ende des Auslöseelements 44 bildet eine Anlagefläche für die Stange 3. Das Auslöseelement 44 ist in einer Führungshülse 45, die auf der Oberseite des Stegs des Dichtungsgehäuses 41 angebracht ist, verschiebbar gelagert. Das Dichtungselement kann dazu in axialer Verlängerung der Stange 3 verschoben werden.

Das Auslöseelement 44 weist einen Kragen auf, an welchem sich eine Feder 46 abstützt, deren anderes Ende sich auf der Oberseite des Dichtungsgehäuses 44 abstützt. Die Feder 46 drückt das Auslöseelement 44 in Richtung der Stange 3 und somit in eine nicht ausgelöste Stellung.

Durch einen Druck auf die Stange 3 gegen die Feder 46 kann das Auslöseelement 44 nach unten verschoben werden, wodurch die Feder 46 komprimiert wird, wie es in Figur 3a dargestellt ist. Beim Absenken der Stange 3 und des Auslöseelements 44 gleitet die schräge Fläche 441 des Auslöseelements 44 auf der schrägen Fläche 431 des Kopplungselements 43, wodurch das Kopplungselement 43 axial verschoben wird. Der Mechanismus, von dem das Kopplungselement 43 ein Teil ist, bewirkt das vollständige Absenken der Dichtungsleiste 42. Das untere Ende des Auslöseelements 44 ist geschlitzt und so gabelförmig ausgebildet.

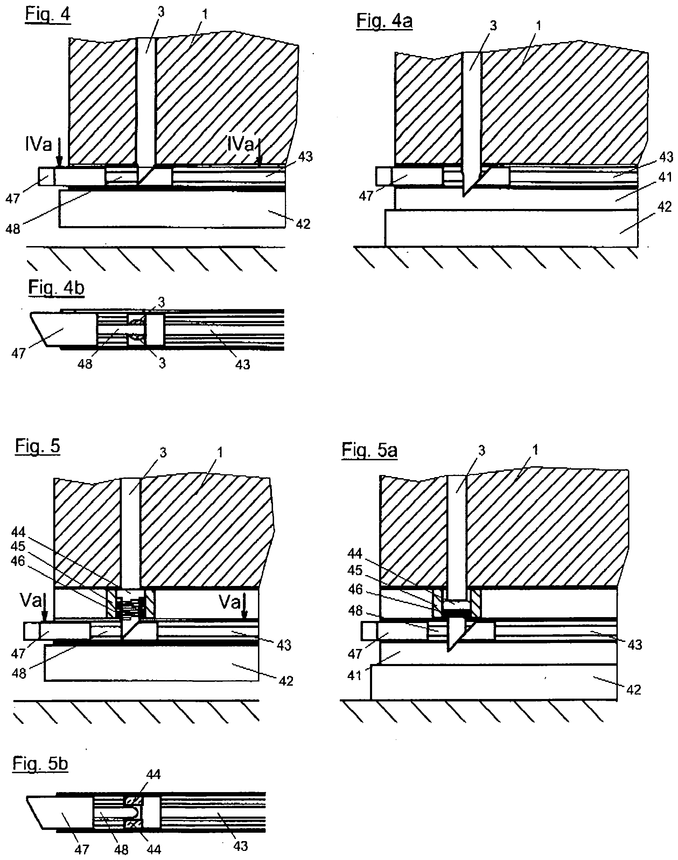

Das Ausführungsbeispiel gemäß der Figur 4 bis 4b entspricht mehr dem Ausführungsbeispiel gemäß der Figur 2 bis 2b als dem Ausführungsbeispiel gemäß der Figuren 3 bis 3b. Es unterscheidet sich von dem Ausführungsbeispiel gemäß der Figuren 2 bis 2b im Wesentlichen dadurch, dass bei dem Ausführungsbeispiel gemäß der Figuren 4 bis 4b ein zweites Auslöseelement 47 zum Auslösen des Absenkens der Dichtungsleiste 42 vorgesehen ist. Dieses zweite Auslösungselement 47 entspricht in seiner Funktion dem von herkömmlichen Bodendichtungen bekannten Auslöseelement, das schlossseitig oder bandseitig über das Dichtungsgehäuse 41 hinausragt.

Das zweite Auslöseelement 47 ist über eine Verbindungsstange 48 mit dem Kopplungselement 43 fest verbunden. Die Verbindungsstange 48 durchgreift dabei einen Schlitz in der dem unteren Ende der Stange 3. Das untere Ende der Stange 3 ist gabelförmig ausgebildet.

Auch das Ausführungsbeispiel gemäß der Figuren 5 bis 5b, welches dem Ausführungsbeispiel gemäß der Figuren 3 bis 3b stark ähnelt, weist ein zweites Auslöseelement 47 auf, das über eine Verbindungsstange 48 mit dem Kopplungselement 43 verbunden ist. Die Verbindungsstange durchgreift dabei den im Auslöseelement 44 vorgesehenen Schlitz.

Wird nun auf das zweite Auslöseelement 47 bei einem der Ausführungsbeispiele gemäß der Figuren 4 bis 4b oder 5 bis 5b ein Druck ausgeübt, bewirkt dies ein Verschieben des Kopplungselements 43 und somit ein Absenken der Dichtleiste 42, die über den Mechanismus mit dem ersten Auslöseelement 3, 44 und dem Auslöseelement 47 verbunden ist.

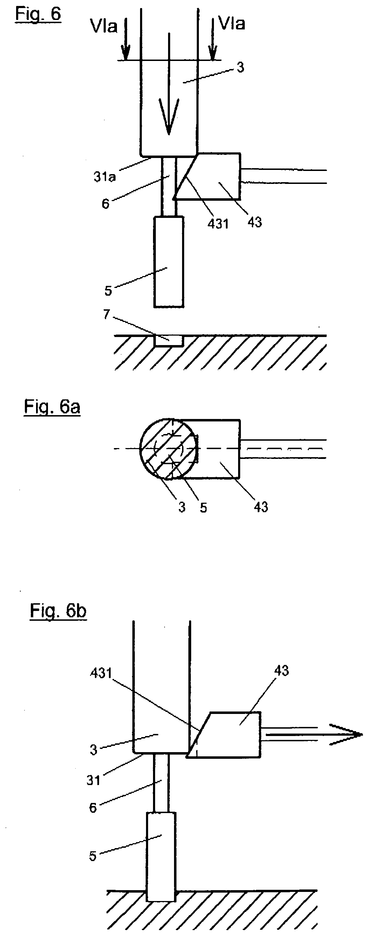

Bei dem letzten Ausführungsbeispiel, dessen Wirkprinzip in den Figuren 6 bis 6b dargestellt ist, ist die als Auslöseelement 3 vorgesehene Stange über ein Verbindungsbolzen 6 mit einem Riegelbolzen 5 verbunden, welcher zum Verriegeln des Türblatts in eine Bodenmulde eingreifen kann. Bei der Stange 3, die als Auslöseelement für die Bodendichtung dient, kann es sich beispielsweise um eine Kantriegelstange oder eine Treibriegelstange handeln. Das untere Ende dieser Stange, nämlich die Stirnfläche 31a der Stange 3 gleitet bei einem Absenken auf der schrägen Fläche 431 des Kopplungselements 43. Dadurch wird das Kopplungselement 43 axial verschoben, wodurch der Mechanismus, dessen Teil das Kopplungselement 43 ist, das Absenken der Dichtungsleiste (nicht dargestellt) bewirkt.

Das Übersetzungsverhältnis zwischen der Bewegung der Stange 3, d. h. des Auslöseelements, und der Bewegung des Kopplungselements ist dabei so gewählt, dass die Stange 3 und der fest mit der Stange 3 verbundene Riegelbolzen 5 eine größere Wegstrecke zurücklegen als die Bodendichtung. Dieses ist sinnvoll, da der Riegelbolzen 6 mit seinem unteren Ende in die Bodenmulde eingreifen muss, während die Dichtungsleiste 42 lediglich auf dem Boden anliegen muss. Im angehobenen Zustand soll dagegen der Riegelbolzen 6 möglichst nicht über die untere Kante der Dichtungsleiste 42 hinausragen.

Die Untersetzung der Bewegung der Dichtungsleiste 42 bezogen auf die Bewegung der Stange 3 kann durch den Mechanismus bewirkt werden oder aber durch das Zusammenwirken der Stange, d. h. der Fläche 31a der Stange 3 und der schrägen Fläche 431 des Kopplungselements. Durch die Wahl der Neigung der Schräge, kann das Übersetzungsverhältnis der Bewegungen vorgegeben werden.

## Patentansprüche

1. Anordnung aus einer Stange (3) und einer Dichtung (4) zum Abdichten einer Unterseite einer Tür, mit einem Auslöseelement (3, 44) zur Auslösung der Dichtung (4), wobei die Dichtung (4) eine bei einer Auslösung der Dichtung (4) absenkbaren Dichtungsleiste (42) und einen Mechanismus aufweist, der ein Kopplungselement (43) umfasst, wobei der Mechanismus geeignet und eingerichtet ist bei der Auslösung der Dichtung (4) eine Bewegung des Kopplungselements (43) in Richtung parallel zur Dichtungsleiste (42) in eine dazu senkrechte Bewegung der Dichtungsleiste (42) umzusetzen und wobei die Stange (3) sich im Wesentlichen senkrecht zur Dichtungsleiste (42) erstreckt,
**dadurch gekennzeichnet,**
**dass** die Stange (3) zum Auslösen der Dichtung (4) verschiebbar ist und entweder das Auslöseelement (44) zur Auslösung der Dichtung (4) von der Stange (3) mit einer Kraft beaufschlagbar ist oder das Auslöseelement (3) durch die Stange (3) gebildet ist,
**dass** mittels des Kopplungselementes (43) des Mechanismus der Dichtung (4) eine Bewegung des Auslöseelementes (3, 44) mit einer Bewegungsrichtung mit einem Winkel größer als 0°, insbesondere senkrecht zur Bewegungsrichtung des Kopplungselements (43) aufnehmbar und mittels des Mechanismus die Bewegung des Kopplungselementes (43) in eine Absenkbewegung der Dichtleiste (42) über die gesamte Länge der Dichtleiste (42) umsetzbar ist und
**dass** das Kopplungselement (43) an einem dem Auslöseelement (3, 44) zugewandten Ende eine zur Bewegungsrichtung des Kopplungselementes (43) schräge Fläche zur Krafteinleitung aus dem Auslöseelement (3, 44) aufweist.

2. Anordnung (4) nach Anspruch 1, **dadurch gekennzeichnet, dass** die Dichtung (4) das Auslöseelement (44) umfasst.

3. Anordnung (4) nach Anspruch 1 oder 2, **dadurch gekennzeichnet, dass** die Dichtung (4) ein Dichtungsgehäuse (41) aufweist, in welchem der Mechanismus angeordnet ist und aus welchem die Dichtungsleiste (42), die sich parallel zum Dichtungsgehäuse (41) erstreckt, zumindest im abgesenkten Zustand herausragt.

4. Anordnung (4) nach Anspruch 3, **dadurch gekennzeichnet, dass** das Dichtungsgehäuse (41) eine Ausnehmung aufweist, durch welche das Kopplungselement (43) zur Auslösung zugänglich ist, welche von dem Auslöseelement (44) durchgriffen ist oder welche für einen Durchgriff eines Auslöseelements (3) geeignet und eingerichtet ist.

5. Anordnung (4) nach einem der Ansprüche 1 bis 4, **dadurch gekennzeichnet, dass** das Auslöselement (44) über mindestens eine zur Bewegungsrichtung des Auslöselements (44) schräge Fläche (441) zur Krafteinleitung in das Kopplungselement (43) geeignet und eingerichtet ist.

6. Anordnung (4) nach einem der Ansprüche 1 bis 5, **dadurch gekennzeichnet, dass** das Auslöseelement (44) an einem dem Kopplungselement (43) zugewandten Ende die schräge Fläche (431) aufweist.

7. Anordnung (4) nach einem der Ansprüche 1 bis 6, **dadurch gekennzeichnet, dass** die schräge Fläche (431, 441) des einen Elements, d. h. des Auslöseelements (44) bzw. des Kopplungselements (43) zum Gleiten auf einer Fläche (441, 431) des jeweils anderen Elements (43, 44) geeignet und eingerichtet ist.

8. Anordnung (4) nach einem der Ansprüche 2 bis 7, **dadurch gekennzeichnet, dass** die Dichtung (4) ein Führungselement (45) aufweist, in welchem das Auslöseelement (44) geführt angeordnet ist.

9. Anordnung (4) nach Anspruch 8, **dadurch gekennzeichnet, dass** das Führungselement (45) auf der Außenseite des Dichtungsgehäuses (41) angebracht ist.

10. Anordnung (4) nach einem der Ansprüche 1 bis 9, **dadurch gekennzeichnet, dass** die Dichtung (4) ein Riegelelement (6) aufweist, welches die Dichtungsleiste (42) durchgreift und sowohl zum Dichtungsgehäuse (41) als auch zur Dichtungsleiste (42) verschiebbar ist.

## Claims

1. Arrangement of a bar (3) and a seal (4) for sealing an underside of a door, with an actuation element (3, 44) for actuating the seal (4), wherein the seal (4) has a seal strip (42) that can be lowered when the seal (4) is actuated, and a mechanism which comprises a coupling element (43), wherein the mechanism is able and set up to convert, when the seal (4) is actuated, a movement of the coupling element (43) in the direction parallel to the seal strip (42) into a movement of the seal strip (42) perpendicular thereto, and wherein the bar (3) extends essentially perpendicular to the seal strip (42), **characterized**
**in that** the bar (3) can be displaced in order to actuate the seal (4) and either the actuation element (44) for actuating the seal (4) can be acted upon with a force by the bar (3) or the actuation element (3) consists of the bar (3),
**in that** by means of the coupling element (43) of the mechanism of the seal (4) it is possible to take up a movement of the actuation element (3, 44) with a direction of movement with an angle of greater than 0°, in particular perpendicular to the direction of movement of the coupling element (43), and to convert by means of the mechanism the movement of the coupling element (43) into a lowering movement of the sealing strip (42) over the entire length of the sealing strip (42), and
**in that** the coupling element (43) has, at an end oriented toward the actuation element (3, 44), a surface that is angled with respect to the direction of movement of the coupling element (43) for the purpose of introducing force from the actuation element (3, 44).

2. Arrangement (4) according to Claim 1, **characterized in that** the seal (4) comprises the actuation element (44).

3. Arrangement (4) according to Claim 1 or 2, **characterized in that** the seal (4) has a seal housing (41) in which the mechanism is arranged and from which the seal strip (42), which extends parallel to the seal housing (41), projects at least in the lowered state.

4. Arrangement (4) according to Claim 3, **characterized in that** the seal housing (41) has a cutout through which the coupling element (43) for actuating is accessible and through which passes the actuation element (44), or which is suitable and configured for an actuation element (3) to pass through.

5. Arrangement (4) according to one of Claims 1 to 4, **characterized in that** the actuation element (44) is suitable and configured for introducing force into the coupling element (43) via at least one surface (441) that is angled with respect to the direction of movement of the actuation element (44).

6. Arrangement (4) according to one of Claims 1 to 5, **characterized in that** the actuation element (44) has the angled surface (431) at an end oriented toward the coupling element (43).

7. Arrangement (4) according to one of Claims 1 to 6, **characterized in that** the angled surface (431, 441) of one element, i.e. of the actuation element (44) or of the coupling element (43) is suitable and configured for sliding on a surface (441, 431) of the respective other element (43, 44).

8. Arrangement (4) according to one of Claims 2 to 7, **characterized in that** the seal (4) has a guide element (45) in which the actuation element (44) is arranged in a guided manner.

9. Arrangement (4) according to Claim 8, **characterized in that** the guide element (45) is attached to the outside of the seal housing (41).

10. Arrangement (4) according to one of Claims 1 to 9, **characterized in that** the seal (4) has a locking element (6) which passes through the seal strip (42) and is displaceable both with respect to the seal housing (41) and with respect to the seal strip (42).

## Revendications

1. Arrangement composé d'une tige (3) et d'une garniture d'étanchéité (4) servant à rendre étanche un côté inférieur d'une porte, comprenant un élément de déclencher (3, 44) destiné à déclencher la garniture d'étanchéité (4), la garniture d'étanchéité (4) possédant une baguette d'étanchéité (42) qui peut être abaissée lors du déclenchement de la garniture d'étanchéité (4) et un mécanisme qui comporte un élément d'accouplement (43), le mécanisme étant adapté et conçu pour, lors du déclenchement de la garniture d'étanchéité (4), convertir un mouvement de l'élément d'accouplement (43) dans une direction parallèle à la baguette d'étanchéité (42) en un mouvement perpendiculaire à celui-ci de la baguette d'étanchéité (42) et la tige (3) s'étendant pour l'essentiel perpendiculairement à la baguette d'étanchéité (42),
**caractérisé en ce**
**que** la tige (3) peut coulisser pour déclencher la garniture d'étanchéité (4) et soit l'élément de déclencher (44) peut être sollicité avec une force par la tige (3) pour déclencher la garniture d'étanchéité (4), soit l'élément de déclencher (3) est formé par la tige (3),
**qu'**un mouvement de l'élément de déclencher (3, 44) avec une direction du mouvement avec un angle supérieur à 0°, notamment perpendiculaire à la direction du mouvement de l'élément d'accouplement (43), peut être absorbé au moyen de l'élément d'accouplement (43) du mécanisme de la garniture d'étanchéité (4) et le mouvement de l'élément d'accouplement (43) peut être converti au moyen du mécanisme en un mouvement d'abaissement de la baguette d'étanchéité (42) sur toute la longueur de la baguette d'étanchéité (42) et que l'élément d'accouplement (43) possède à une extrémité à l'opposé de l'élément de déclencher (3, 44) une surface biseautée par rapport à la direction du mouvement de l'élément d'accouplement (43) destinée à la transmission de force depuis l'élément de déclencher (3, 44).

2. Arrangement (4) selon la revendication 1, **caractérisé en ce que** la garniture d'étanchéité (4) comprend l'élément de déclencher (44).

3. Arrangement (4) selon la revendication 1 ou 2, **caractérisé en ce que** la garniture d'étanchéité (4) comprend un boîtier de garniture d'étanchéité (41) dans lequel est disposé le mécanisme et depuis lequel la baguette d'étanchéité (42), qui s'étend parallèlement au boîtier de garniture d'étanchéité (41), fait saillie au moins dans l'état abaissé.

4. Arrangement (4) selon la revendication 3, **caractérisé en ce que** le boîtier de garniture d'étanchéité (41) possède une cavité à travers laquelle l'élément d'accouplement (43) est accessible pour le déclenchement, laquelle est pénétrée par l'élément d'accouplement (44) ou laquelle est adaptée et conçue pour une pénétration d'un élément de déclencher (3).

5. Arrangement (4) selon l'une des revendications 1 à 4, **caractérisé en ce que** l'élément de déclencher (44) est adapté et conçu pour la transmission de force dans l'élément d'accouplement (43) par le biais d'au moins une surface (441) biseautée par rapport à la direction du mouvement de l'élément de déclencher (44).

6. Arrangement (4) selon l'une des revendications 1 à 5, **caractérisé en ce que** l'élément de déclencher (44) possède la surface biseautée (431) à une extrémité qui fait face à l'élément d'accouplement (43).

7. Arrangement (4) selon l'une des revendications 1 à 6, **caractérisé en ce que** la surface biseautée (431, 441) d'un élément, c'est-à-dire de l'élément de déclencher (44) ou de l'élément d'accouplement (43), est adaptée et conçue pour glisser sur une surface (441, 431) de l'autre élément respectif (43, 44).

8. Arrangement (4) selon l'une des revendications 2 à 7, **caractérisé en ce que** la garniture d'étanchéité (4) possède un élément de guidage (45) dans lequel l'élément de déclencher (44) est disposé en étant guidé.

9. Arrangement (4) selon la revendication 8, **caractérisé en ce que** l'élément de guidage (45) est monté sur le côté extérieur du boîtier de garniture d'étanchéité (41).

10. Arrangement (4) selon l'une des revendications 1 à 9, **caractérisé en ce que** la garniture d'étanchéité (4) possède un élément formant verrou (6) qui pénètre dans la baguette d'étanchéité (42) et peut coulisser à la fois par rapport au boîtier de garniture d'étanchéité (41) et par rapport à la baguette d'étanchéité (42).
